# EUROPEAN PATENT APPLICATION

(11) **EP 2 436 905 A1**
(43) Date of publication of application: **04.04.2012**
(21) Application number: 10780536.8
(22) Date of filing: 25.05.2010
(51) Int. Cl.: F02M 25/022, F02B 47/04, F02M 37/00

(54) **MIXER FOR FUEL SUPPLY DEVICE AND FUEL SUPPLY SYSTEM**

(30) Priority: 25.05.2009 JP 2009125393
(71) Applicant: Ito Racing Service Co., Ltd,, Okazaki-shi, Aichi 444-3441 (JP)
(72) Inventor: ITO Takeshiro, Okazaki-shi Aichi 444-3441 (JP)
(74) Representative: Vogel, Andreas
(86) International application number: PCT/JP2010/058812
(87) International publication number: WO 2010/137581

(57) **Abstract**

Provided is a mixer including a ring-shaped swirl chamber; an inlet port which is connected to the swirl chamber in a direction tangential to the outer circumference of the swirl chamber to suck a fuel; a cylindrical vortex chamber coaxially and more inwardly formed with respect to the swirl chamber; a passage which connects the swirl chamber to the vortex chamber; and a taper port which is coaxially connected to the vortex chamber and is configured so that the inner diameter thereof is decreased from the vortex chamber-side end toward the opposite side end; and a supply port which is in communication with the taper port to suck a desired fluid.

## Description

### TECHNICAL FIELD

The present invention relates to a mixer used for a fuel supply device that supplies fuel to an internal combustion engine. More particularly, the present invention relates to a mixer that mixes fuel with other fluids such as water and air.

### BACKGROUND ART

Conventionally, as described in Patent Document 1, it is known to supply a mixed fuel in which water and air are mixed into a fuel to an internal combustion engine so as to improve combustion efficiency.
In a device described in Patent Document 1, supplied fuel, water and air are mixed by a mixer to produce an air-mixed aqueous oil emulsion fuel. The aqueous oil emulsion fuel is stored in a chamber, and supplied to the internal combustion engine from the chamber through supply piping. The excess aqueous oil emulsion fuel in the internal combustion engine is returned to the chamber via the piping.

### PRIOR ART DOCUMENT

### PATENT DOCUMENT

Patent Document 1: Unexamined Japanese Patent Application Publication No. 59-77067

### DISCLOSURE OF THE INVENTION

### PROBLEMS TO BE SOLVED BY THE INVENTION

In the above-described device, a partition for dividing a fluid in half is provided in a passage. Also, a plurality of fungiform projections are provided along the passage at regular intervals. Thus, the configuration of the device is complex. Further, with recent increasing concerns about environment, high-level improvement in combustion efficiency is demanded. However, it is difficult for the above-described mixer and the fuel supply system using the mixer to sufficiently meet the demand.

One object of the present invention is to allow a mixer that produces a mixed fuel and a fuel supply system using the mixer to produce a mixed fuel with higher combustion efficiency than before.

### MEANS TO SOLVE THE PROBLEMS

One aspect of the present invention provides a mixer that mixes a fuel supplied to an internal combustion engine and a desired fluid, and includes: a ring-shaped swirl chamber; an inlet port; a cylindrical vortex chamber; a passage; a taper port; and a supply port. The inlet port is connected to the swirl chamber in a direction tangential to an outer circumference of the swirl chamber to suck a fuel. The vortex chamber is coaxially and more inwardly formed with respect to the swirl chamber. The passage connects the swirl chamber to the vortex chamber. The passage is composed of a plurality of passages. A connecting path of each the passage is formed into a near arc shape so that the plurality of passages form a vortex pattern. The taper port is coaxially connected to the vortex chamber and is configured so that an inner diameter thereof is decreased from a vortex chamber-side end toward an opposite side end. The supply port is in communication with the taper port to suck the desired fluid.

The mixer in a second aspect of the present invention includes a cylinder portion and a flow regulating fin. The cylinder portion is formed coaxially to the vortex chamber, and arranged to protrude into the vortex chamber. The flow regulating fin protrudes from an outer wall of the cylinder portion to reach an inner circumferential wall of the vortex chamber.

In the mixer in a third aspect of the present invention, the cylinder portion includes an outlet port. The outlet port is formed coaxially to the vortex chamber and communicates the taper port with an outside of the mixer.
In the mixer in a fourth aspect of the present invention, the supply port is in communication with the taper port at a reduced diameter side end thereof.

In the mixer in a fifth aspect of the present invention, the outlet port is formed into a taper.
A sixth aspect of the present invention provides a fuel supply system that supplies a fuel to an internal combustion engine, and includes a mixer that mixes the fuel for the internal combustion engine and a desired fluid.

The mixer according to the first to fifth aspects of the present invention can be used as the mixer in the fuel supply system.
The fuel supply system in a seventh aspect of the present invention is configured to be able to switch the fuel supplied to the internal combustion engine between a fuel prestored in a fuel tank for the internal combustion engine and a fuel mixed by the mixer.

### EFFECT OF THE INVENTION

In the mixer of the present invention, the inlet port is connected to the swirl chamber in a direction tangential to an outer circumference of the swirl chamber. According to such configuration, when the fuel is sucked from the inlet port into the swirl chamber, the fuel swirls along the swirl chamber.

The passage connecting the swirl chamber to the vortex chamber is configured to form into an arc shape. Moreover, the passage is configured to be composed of a plurality of passages which forms a vortex pattern.
According to such configuration, the fuel is guided from the swirl chamber to the vortex chamber through the passage to form a vortex. Owing to the vortex, the fuel and the desired fluid are easy to be mixed. In other words, the fuel and the desired fluid can be easily mixed. Also, microparticulation of the desired fluid can be promoted.

For example, if water and air are employed as the desired fuel, microparticulated water and air are mixed with the fuel. Microscopic air bubble can facilitate combustion of the fuel. Also, microscopic foam causes a microexplosion upon combustion of the fuel.

By mixing the air bubble and foam in a microscopic form with the fuel, fuel combustion is improved. Also, combustion is performed at lower temperature.
Fuel consumption is improved due to improvement in combustion efficiency. Further, since combustion is performed at low temperature, nitrogen oxide is reduced and emission is improved.

### BRIEF DESCRIPTION OF THE DRAWINGS

FIG. 1 is a schematic configuration diagram of a fuel supply system according to a first embodiment.
FIG. 2 is an enlarged cross sectional view of a mixer according to the first embodiment.
FIG. 3 is a cross sectional view taken along a line III-III in FIG. 2.
FIG. 4 is a cross sectional view taken along a line IV-IV in FIG. 2.
FIG. 5 is an enlarged perspective view of a flow regulating fin according to the first embodiment.
FIG. 6 is a schematic configuration diagram of a fuel supply system according to a second embodiment.
FIG. 7 is an enlarged cross sectional view of a first mixer according to the second embodiment.
FIG. 8 is an enlarged cross sectional view of a second mixer according to the second embodiment.
FIG. 9 is an enlarged cross sectional view of a mixer according to the second embodiment.
FIG. 10 is a schematic configuration diagram of a fuel supply system according to a third embodiment.
FIG. 11 is a cross sectional configuration diagram of a float valve 216.
FIG. 12 is a cross sectional configuration diagram of a three-way valve 217.
FIG. 13 is a cross sectional configuration diagram of a three-way valve 218.
FIG. 14 is a flowchart illustrating a control flow of a fuel supply system.
FIG. 15 is a passage diagram of a fuel supply system according to the third embodiment.
FIG. 16 is a diagram of an oscillation device according to a variation.

### EXPLANATION OF REFERENCE NUMERALS

1...internal combustion engine, 2...fuel injection valve, 4...supply pipe, 6,104...mixing tank, 8...fuel, 10...water, 16...fuel pump, 20...outlet pipe, 22...reliefvalve, 24,112...return pipe, 26,64...mixer, 28...inlet port, 30,30a,120...mixer body, 32...swirl chamber, 34...vortex chamber, 36...partition, 36a...upper end surface, 38...opening, 40...nozzle member, 42...passage, 44...taper port, 46...first supply port, 48...water suction pipe, 52...second supply port, 54...air suction pipe, 56...cylinder portion, 58...connection port, 60...outlet port, 62...flow regulating fin, 100...fuel tank, 102...water tank, 108...fuel pump, 110...injection pump, 114...first mixer, 122,132...cover member, 124...connection port, 126...first fuel pump, 130...second mixer, 131...second fuel pump, 140...water supply pipe, 140...water suction pipe, 142...outlet pipe, 144...mixer, 200...internal combustion engine, 209...fuel tank, 210...water tank, 211...oil tank, 300...mixing tank

### BEST MODE FOR CARRYING OUT THE INVENTION

Embodiments of the present invention will now be explained in detail below based on the drawings.

### [First embodiment]

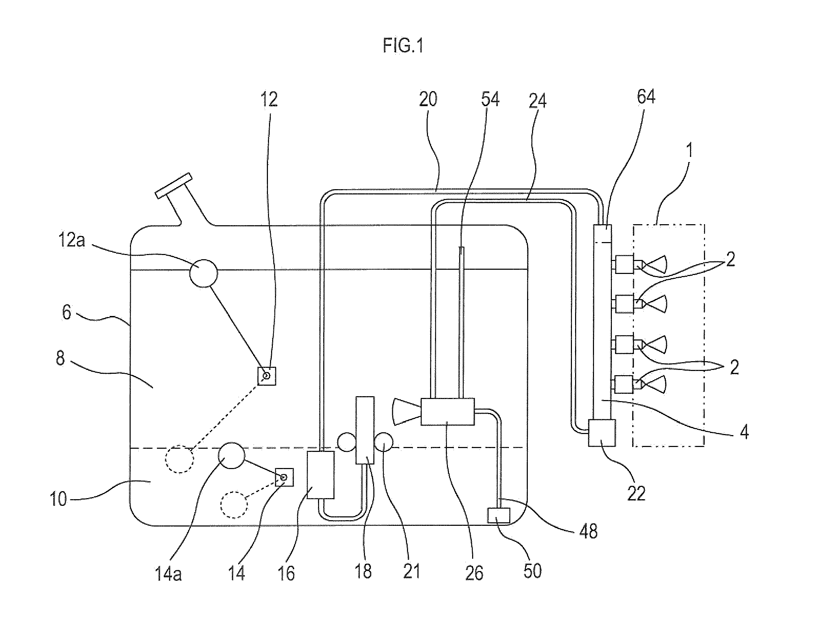

Referring to FIGS. 1 to 5, a fuel supply system and a mixer according to a first embodiment will be described. Description below presupposes that an internal combustion engine 1 is a four-cylinder gasoline engine. The present invention is not limited to a four-cylinder gasoline engine and can be also applied to a gasoline engine having a different number of cylinders. Furthermore, the present invention can be applied not only to a gasoline engine but also to a diesel engine.

In FIG. 1, the internal engine 1 is provided with a fuel injection valve 2 per not shown cylinder. A fuel is injected to each cylinder from each fuel injection valve 2. A supply pipe 4 is connected to each fuel injection valve 2. The supply pipe 4 guides the fuel to each fuel injection valve 2.

A mixing tank 6 is connected to the supply pipe 4. The mixing tank 6 stores a fuel 8 and water 10. The specific gravity of the water 10 (1.0 g/cm³) is larger than that of the fuel 8 (0.73 to 0.75 g/cm³). Thus, the water 10 is stored at a bottom side of the mixing tank 6, as shown by a broken line in FIG. 1. In the present embodiment, a fuel tank itself mounted on a vehicle is used as the mixing tank 6.

The mixing tank 6 is provided with level sensors 12 and 14. The level sensor 12 detects a height of a fluid level of the fuel 8 (i.e., quantity of the fuel 8). The level sensor 14 detects a height of a fluid level of the water 10 (i.e., quantity of the water 10). The level sensor 12 outputs the level of the fuel 8 in accordance with an up and down movement of a float 12a floating on the fuel 8. The level sensor 14 outputs the level of the water 10 in accordance with an up and down movement of a float 14a which floats on a boundary (a broken line shown in FIG. 1) between the fuel 8 and the water 10.

A fuel pump 16 is disposed inside the mixing tank 6. The mixing tank 16 sucks the fuel 8 and a later-explained mixed fuel inside the mixing tank 6 via a filter 18 and discharges the mixed fuel to an outlet pipe 20. The outlet pipe 20 is connected to the supply pipe 4. A float 21 which floats on the boundary (the broken line shown in FIG. 1) between the fuel 8 and the water 10 is attached to the filter 18. Thereby, regardless of an up and down movement of the boundary between the fuel 8 and the water 10, the filter 18 is adapted to be located at least partially in a region of the fuel 8. Accordingly, regardless of the up and down movement of the boundary between the fuel 8 and the water 10, the fuel pump 16 is configured to suck the fuel 8 located above the boundary or the mixed fuel.

A relief valve 22 is attached to the supply pipe 4. A return pipe 24 is connected to the relief valve 22. The relief valve 22 is configured to allow the fuel 8 or the mixed fuel to escape to the return pipe 24 when a pressure inside the supply pipe 4 exceeds a predetermined pressure.

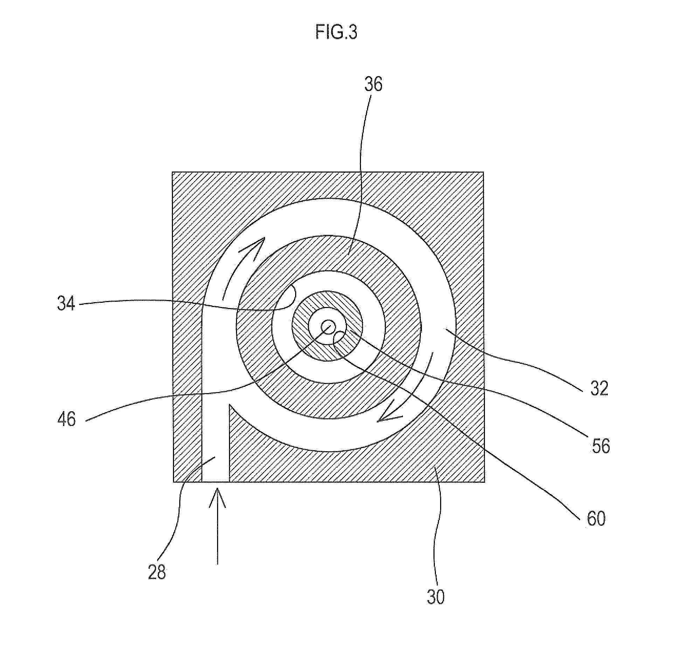

The return pipe 24 is connected to a mixer 26 disposed inside the mixing tank 6. The mixer 26 is arranged above the boundary between the fuel 8 and the water 10 of the mixing tank 6.
As shown in FIG. 3, an inlet port 28 to which the return pipe 24 is connected is formed in a mixer body 30 of the mixer 26. Also, inside the mixer body 30, a ring-shaped swirl chamber 32 is formed. The inlet port 28 is connected to the swirl chamber 32 in a direction tangential to an outer circumference of the swirl chamber 32.

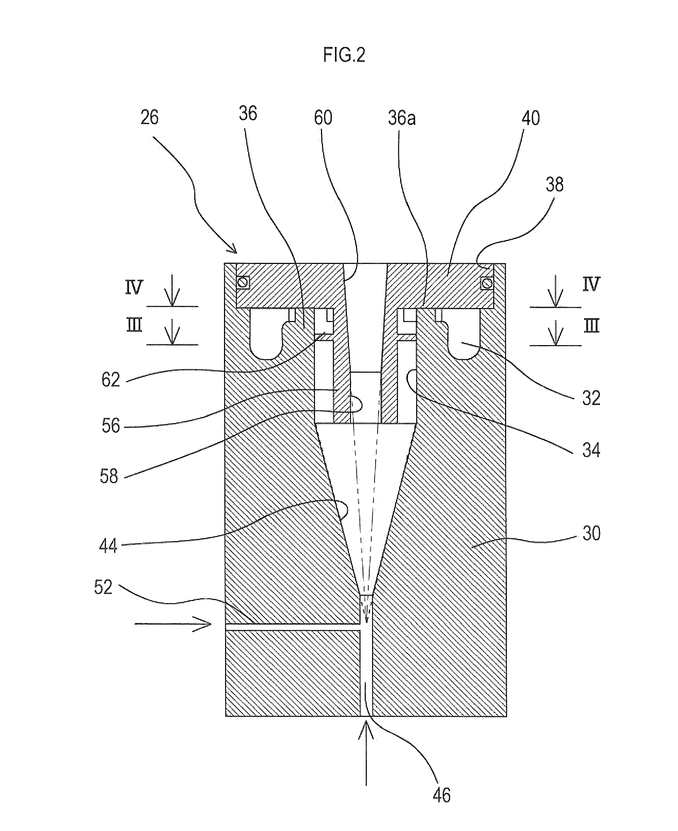

As shown in FIG. 2, in the mixer body 30, a cylindrical vortex chamber 34 is formed coaxially to the swirl chamber 32. An inner circumference of the vortex chamber 34 is formed into a circle. The vortex chamber 34 is arranged on the inner side of the swirl chamber 32. The vortex chamber 34 and the swirl chamber 32 are divided by a partition 36. An opening 38 having a larger outer diameter than the swirl chamber 32 is formed continuous to the swirl chamber 32 and the vortex chamber 34. A nozzle member 40 is inserted to the opening 38. By the nozzle member 40 inserted to the opening 38, one end sides of the swirl chamber 32 and the vortex chamber 34 are closed. The nozzle member 40 is brought into contact with an upper end surface 36a of the partition 36.

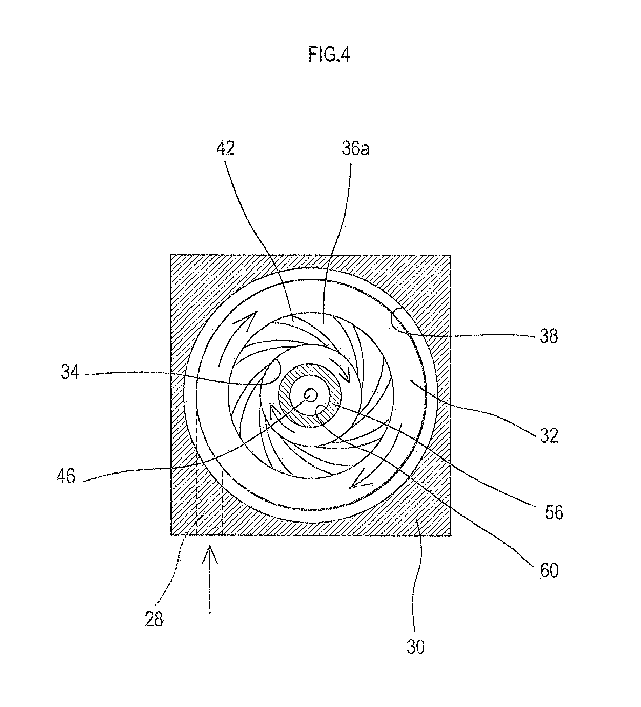

A plurality of (eight, in the present embodiment) passages 42 which connect the swirl chamber 32 and the vortex chamber 34 are formed on the upper end surface 36a of the partition 36 (see FIG. 4). The passages 42 are formed at regular intervals on the upper end surface 36a of the partition 36. As a fluid flows into the swirl chamber 32 from the inlet port 28, a swirl flow is produced in the swirl chamber 32. As shown in Fig. 4, each passage 42 is formed into a near arc shape. More particularly, each passage 42 is formed along a swirling direction of the swirl flow, such that an extending direction of each passage 42 is the same as the swirling direction.

Therefore, the fluid flows into the vortex chamber 34 via the passages 42 from the swirl chamber 32. More particularly, the fluid flows into the vortex chamber 34 in a swirling manner. Also, each passage 42 is formed such that its width is larger at an inlet side of the swirl chamber 32, and its width at an outlet side of the vortex chamber 34 is smaller. Moreover, each passage 42 is chamfered on the inlet side (swirl chamber 32 side) to have a large cross-section area.

As shown in FIG. 2, on a lower side of the vortex chamber 34 (a side opposite to a side closed by the nozzle member 40), a taper port 44 continuous to the vortex chamber 34 is formed. The taper port 44 is formed coaxially to the vortex chamber 34. One end on an expanded diameter side of the taper port 44 is formed to have a diameter substantially the same as that of the vortex chamber 34, and is connected to the vortex chamber 34. The taper port 44 is formed such that its diameter becomes gradually smaller from the vortex chamber 34 side toward the opposite side.

A first supply port 46 is connected to a reduced diameter side of the taper port 44. The first supply port 46 is formed coaxially to the taper port 44. A water suction pipe 48 (see FIG. 1) is connected to the first supply port 46. As shown in FIG. 1, one end opposite to a side connected to the mixer 26 (first supply port 46) of the water suction pipe 48 is connected to the filter 50. The filter 50 is arranged on a bottom side of the mixing tank 6.

As shown in Fig. 2, a second supply port 52 continuous to the first supply port 46 is formed in the mixer body 30. An air suction pipe 54 (see Fig. 1) is connected to the second supply port 52. One end opposite to a side connected to the mixer 26 (second supply port 52) of the air suction pipe 54 is continuous to an air layer above the fuel 8 inside the mixing tank 6.

A cylinder portion 56 is provided in the nozzle member 40 in a manner to protrude to the vortex chamber 34. The cylinder portion 56 is formed coaxially to the vortex chamber 34. The cylinder portion 56 is formed to have a length that reaches to a boundary between the vortex chamber 34 and the taper port 44. A connection port 58 continuous to the taper port 44 is formed in the cylinder portion 56. Also, a tapered outlet port 60 is formed in the nozzle member 40. One end of the outlet port 60 is continuous to the connection port 58, and the other end thereof is open in the mixing tank 6. The outlet port 60 is provided such that its diameter is increased from one end on the connection port 58 side toward the other end. The connection port 58 and the outlet port 60 are formed coaxially to the vortex chamber 34.

In the present embodiment, a taper angle of the outlet port 60 and a taper angle of the taper port 44 are determined such that the position of an end of the outlet port 60 virtually extended toward the first supply port 46 coincides with the position of an end of the taper port 44 virtually extended toward the first supply port 46.

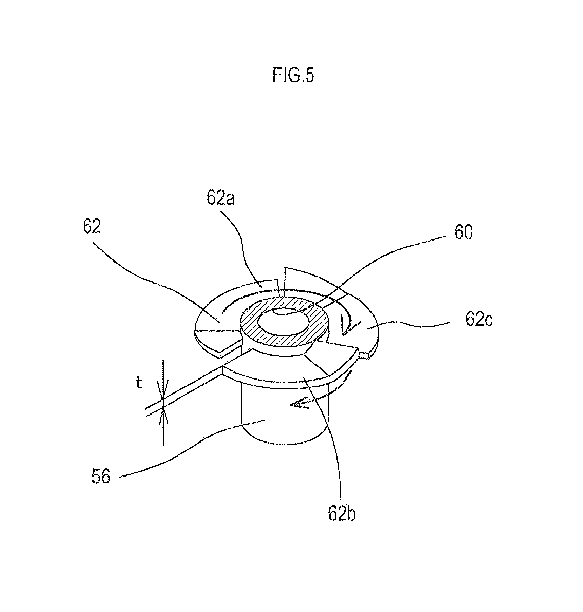

In an outer circumference of the cylinder portion 56, a flow regulating fin 62 is provided orthogonal to an axial direction of the vortex chamber 34 (see FIG. 5). The flow regulating fin 62 is formed almost all around the outer circumference of the cylinder portion 56. Also, the flow regulating fin 62 protrudes from the outer circumference of the cylinder portion 56 in a manner to reach the inner wall of the vortex chamber 34.

The flow regulating fin 62 is provided near an outlet of the passages 42 to the vortex chamber 34. As shown in FIG. 5, in the present embodiment, the flow regulating fin 62 includes three blades 62a, 62b and 62c. One end side of each blade 62a, 62b, 62c is slightly bent. Thereby, gaps are formed between each blade 62a, 62b, 62c.

The fluid coming from the swirl chamber 32 to the vortex chamber 34 via the passages 42 flows along the shapes of the swirl chamber 32, the passages 42 and the vortex chamber 34 to form a vortex. The bent on one end side of each blade 62a, 62b, 62c is configured such that the fluid forming a vortex flows through the gaps between each blade 62a, 62b, 62c and forms the vortex of fluid properly. Also, a thickness "t" of the flow regulating fin 62 is 0.1-0.2 mm in the present embodiment. The thickness "t" can take a different value and can be determined as required depending on experimental results and so on.

Now, operation of the mixer 26 will be described.
Firstly, upon starting the internal combustion engine 1, the fuel 8 and the water 10 are separated inside the mixing tank 6. The mixing tank 6 prestores the fuel 8 and the water 10 at a constant ratio. When the fuel pump 16 is driven, the fuel pump 16 sucks the fuel 8 through the filter 18, and supplies the fuel 8 to the supply pipe 4 through the outlet port 20.

The fuel 8 supplied to the supply pipe 4 is injected to each cylinder of the internal combustion engine 1 from the each fuel injection valve 2. The excess fuel 8 in the supply port 4 flows into the mixer 26 through the relief valve 22 and the return pipe 24. In the mixer 26, the fuel 8 flows from the inlet port 28 connected to the return pipe 24 to the swirl chamber 32. Since the fuel 8 flows into the ring-shaped swirl chamber 32 in its tangential direction, the flow of the fuel 8 becomes a swirl flow in accordance with the shape of the swirl chamber 32. The fuel 8 flows from the swirl chamber 32 to the vortex chamber 34 through the passages 42. Total sum of cross-sectional areas of the plurality of the passages 42 is smaller than the cross-sectional area of the swirl chamber 32. When the fuel 8 flows into the vortex chamber 34 through the passages 42 from the swirl chamber 32, the flow rate of the fuel 8 increases. Also, the cross-sectional area of each passage 42 becomes gradually smaller toward the vortex chamber 34. Thus, as the fuel 8 flows toward the vortex chamber 34, the flow rate of the fuel 8 further increases.

When the fuel 8 flow into the vortex chamber 34 from the passages 42, a vortex flow having a large flow rate is produced around the outer circumference of the cylinder portion 56 in the vortex chamber 34. In the vortex chamber 34, the vortex flow of the fuel 8 flows through the gaps between each blade 62a, 62b, 62c. The vortex flow around the cylinder portion 56 is regulated by the flow regulating fin 62.

The vortex flow of the fuel 8 flows into the taper port 44 from the vortex chamber 34. At this point, due to the vortex effect, the water 10 inside the mixing tank 6 is sucked into the taper port 44 through the filter 50, the water suction pipe 48 and the first supply port 46. In addition, air is sucked into the taper port 44 through the air suction pipe 54 and the second supply port 52. The water 10 and air flowing into the taper port 44 are mixed with the fuel 8 inside the taper port 44 to form a vortex flow. Thereby, an emulsion fuel containing air is produced.

Inside the vortex chamber 34 and the taper port 44, the rapid vortex flow of the fuel 8 swirls. The water 10 and air are mixed into the fuel 8. Thus, microparticulation and mixing of the water 10 and the air are facilitated. The air is mixed with the vortex flow inside the taper port 44 to form fine bubbles. The emulsion fuel mixed with the fine bubbles is produced as a mixed fuel. The mixed fuel flows into the connection port 58 inside the cylinder portion 56 from the taper port 44, and is discharged further into the mixing tank 6 from the outlet port 60.

In the present embodiment, the emulsion fuel has air bubbles and water bubbles having a diameter of microsize or nanosize. Particularly, the air bubbles and water bubbles have a diameter of 1 µm to 10 µm. It is preferable that the diameter of the air bubbles and water bubbles is 5 µm to 10 µm. The mixing ratio of the fuel 8, the water 10 and the air may be determined as required. For example, the water 10 may be from around 5% to 55%, and the air from around a several % to several tens %, to the ratio of the fuel 8.

As noted above, by the driven fuel pump 16, the fuel 8 is delivered to the supply pipe 4. In the supply pipe 4, the excess fuel 8 is supplied to the mixer 26. In the mixer 26, the mixed fuel in which the water 10 and the air are mixed into the fuel 8 is produced. The mixed fuel is discharged into the mixing tank 6. When the mixed fuel is supplied into the mixing tank 6 (or the mixing tank 6 is filled with the mixed fuel), the fuel pump 16 sucks the mixed fuel and supplies the mixed fuel to the supply pipe 4 through the outlet pipe 20.

The mixed fuel supplied to the supply pipe 4 is injected to each cylinder of the internal combustion engine 1 from each fuel injection valve 2. In combustion of the mixed fuel in the internal combustion engine 1, the microparticulated air in the mixed fuel facilitates combustion of the fuel 8, and the water 10 causes a microexplosion, and so on. Thereby, combustion efficiency is improved. Also, combustion is performed at lower temperature. Fuel consumption is improved due to improvement in combustion efficiency. Also, since combustion is performed at low temperature, nitrogen oxide is reduced and emission is improved.

The excess mixed fuel in the supply pipe 4 is supplied to the mixer 26 again through the return pipe 24. It is preferable that 60% to 70% of the mixed fuel supplied to the supply pipe 4 is returned to the mixer 26.

In the mixer 26, the mixed fuel flows into the swirl chamber 32 through the inlet port 28, and further flows into the vortex chamber 34 through the passages 42 from the swirl chamber 32. In the vortex chamber 34, a vortex flow of the mixed fuel is produced around the outer circumference of the cylinder portion 56. As the mixed fuel flows into the taper port 44 from the vortex chamber 34 to produce a vortex flow, the mixed fuel is stirred. Further, mixing of the fuel 8 or the mixed fuel, and the water 10 and the air is facilitated. Thereby, separation of the water 10 in the mixed fuel is suppressed. Also, microparticulation of the air bubbles to be mixed is continuously achieved.

Particularly, due to the vortex effect, the fuel 8 or the mixed fuel inside the mixing tank 6 is sucked into the taper port 44 through the filter 50, the water suction pipe 48 and the first supply port 46. Also, air is sucked into the taper port 44 through the air suction pipe 54 and the second supply port 52. At this point, due to the vortex flow of the mixed fuel in the taper port 44, the air is mixed into the mixed fuel to form fine bubbles.

The water 10 at the bottom of the mixing tank 6 can be a water before mixed with the fuel 8 by the mixer 26, or a water separated from the mixed fuel. In either way, in case that the water 10 is left at the bottom of the mixing tank 6, the water 10 is sucked into the taper port 44 via the filter 50, the water suction pipe 48 and the first supply port 46, and mixed with the mixed fuel.

Bubbles can be separated from the mixed fuel stored in the mixing tank 6. However, as long as the fuel pump 16 (internal combustion engine 1) continues to be driven, the bubbles are mixed into the mixed fuel again by the mixer 26. Specifically, the bubbles (air) are resupplied to the mixed fuel. As the fuel pump 16 (internal combustion engine 1) continues to be driven, the separated bubbles (air amount) and the resupplied bubbles (air amount) come to equilibrium in the mixed fuel. A steady state is achieved in which the bubbles (air amount) mixed into the mixed fuel are constant.

The fuel 8 and the mixed fuel are sucked from the mixing tank 6 to the mixer 26 to be mixed in the mixer 26, and then discharged to the mixing tank 6 from the mixer 26, to be circulated. Even if bubbles are separated from the mixed fuel during the time until the mixed fuel is returned to the mixer 26, the bubbles are again mixed into the mixed fuel by the mixer 26. Then, the mixed fuel is discharged from the outlet port 60 into the mixing tank 6. Thereby, the mixed fuel in which the water and air are mixed into the fuel 8 is always stored in the mixing tank 6.

The mixer 26 stirs the mixed fuel returned from the internal combustion engine 1 and mixes air into the mixed fuel again to discharge the mixed fuel into the mixing tank 6. Thus, even if the water 10 and air are separated, the water 10 and air are mixed again. According to the present embodiment, a simple structure allows to continuously supply the mixed fuel which mixes the fuel 8, the water 10 and air to the internal combustion engine 1.

Also, in the present embodiment, a mixer 64 is provided between the outlet pipe 20 and the supply pipe 4. The detail of the mixer 64 will be described later. The mixer 64 can be provided as required. With the mixer 64, mixing of the mixed fuel is facilitated. The mixer 64 basically has the same configuration as that of the aforementioned mixer 26. The mixer 64 is different from the aforementioned mixer 26 in that the mixer 64 does not have the first supply port 46 and the second supply port 52. A particular illustration of the mixer 64 is omitted. Reference should be made to FIGS. 2 to 5, as required.

When the mixed fuel is discharged from the mixer 64 into the mixing tank 6, the mixed fuel inside the mixing tank 6 can be supplied from the fuel pump 16 to the mixer 64. In the mixer 64, the mixed fuel flows into the swirl chamber 32 via the inlet port 28, and further flows into the vortex chamber 34 through the passages 42 from the swirl chamber 32. Inside the vortex chamber 34, a vortex flow of the mixed fuel is produced around the outer circumference of the cylinder portion 56. The mixed fuel that flows into the taper port 44 from the vortex chamber 34 is stirred by forming a vortex flow. Specifically, the fuel 8, the water 10 and air are stirred and mixed. Microparticulation of the water 10 and air are again facilitated. The mixed fuel mixed in the mixer 64 is discharged from the outlet port 60 to the supply pipe 4.

### [Second embodiment]

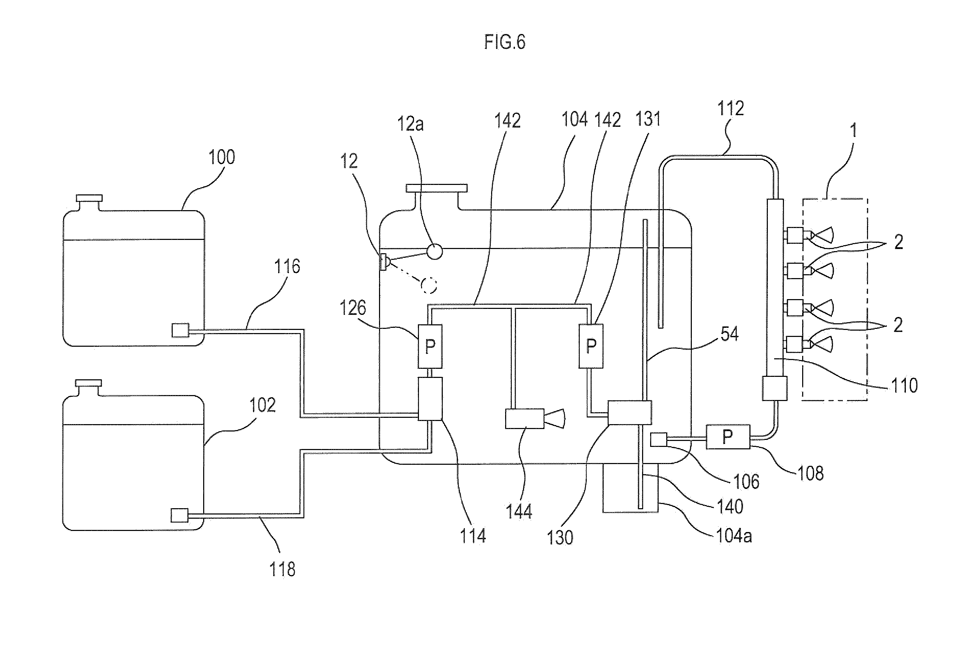

Now, the fuel supply system and the mixer according to a second embodiment will be described, referring to FIGS. 6 to 9. The description also refers to FIGS. 2 to 5 as required. To the same components as those in the aforementioned embodiment, the same reference numbers will be used and the detailed description will not be repeated.

In the second embodiment, the internal combustion engine 1 is a diesel engine. Also, as shown in FIG. 6, a fuel tank 100 storing fuel and a water tank 102 storing water are provided in the system according to the second embodiment. A mixing tank 104 is also provided which connects the fuel tank 100 and the water tank 102.

A first mixer 114 is provided inside the mixing tank 104. A fuel supply pipe 116 connected to the fuel tank 100, and a water supply pipe 118 connected to the water tank 102, are connected to the first mixer 114.

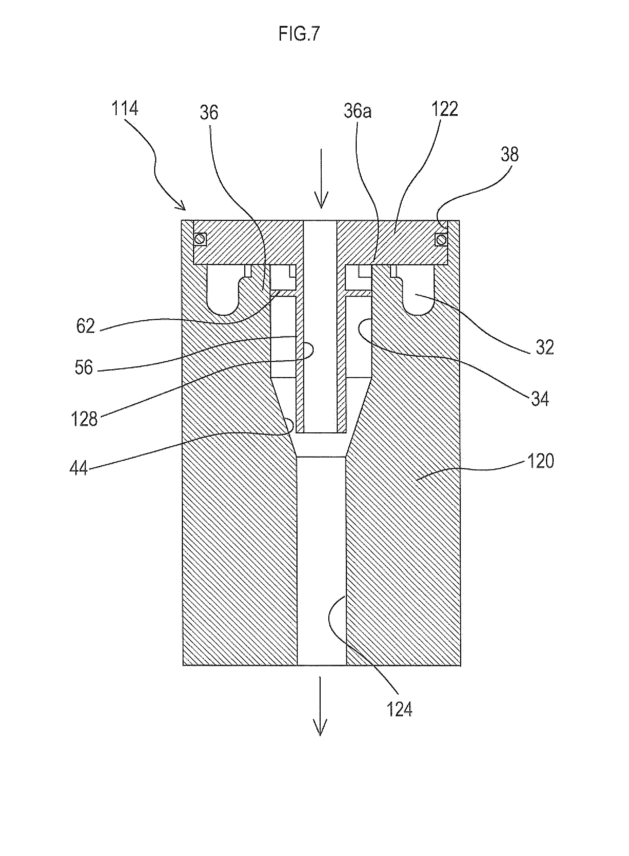

The first mixer 114 basically has the same configuration as that of the aforementioned mixer 26 (see FIG. 3). More particularly, an inlet port 28 is formed in a mixer body 120 of the first mixer 114. The fuel supply pipe 116 is connected to the inlet port 28. Inside the mixer body 120, the ring-shaped swirl chamber 32 is formed. The inlet port 28 is connected to the swirl chamber 32 in the direction tangential to the outer circumference of the swirl chamber 32 (see FIGS. 3 and 7).

As shown in FIG. 7, in the mixer body 120, the cylindrical vortex chamber 34 is formed coaxially to the swirl chamber 32. The inner circumference of the vortex chamber 34 is formed into a circle. The vortex chamber 34 is arranged on the inner side of the swirl chamber 32. The vortex chamber 34 and the swirl chamber 32 are divided by the partition 36. The opening 38 having a larger outer diameter than the swirl chamber 32 is formed continuous to the swirl chamber 32 and the vortex chamber 34. A cover member 122 is inserted to the opening 38. By the cover member 122 inserted to the opening 38, each one end side of the swirl chamber 32 and the vortex chamber 34 is closed. The cover member 122 is brought into contact with the upper end surface 36a of the partition 36.

The plurality of (eight, in the present embodiment) passages 42 which connect the swirl chamber 32 and the vortex chamber 34 are formed on the upper end surface 36a of the partition 36 (see FIG. 4). The passages 42 are formed at regular intervals on the upper end surface 36a of the partition 36. As noted above, as a fluid flows into the swirl chamber 32 from the inlet port 28, a swirl flow is produced in the swirl chamber 32. Each passage 42 is formed into a near arc. More particularly, each passage 42 is formed along the swirling direction of the swirl flow, and is formed such that direction in which each passage 42 extends is the same direction as the swirling direction.

Therefore, the fluid flows into the vortex chamber 34 via the passages 42 from the swirl chamber 32. More particularly, the fluid flows in in a swirling manner. Also, each passage 42 is formed such that its width is larger at an inlet side of the swirl chamber 32, and its width at an outlet side of the vortex chamber 34 is smaller. Moreover, at the inlet side (swirl chamber 32 side) of each passage 42, each passage 42 is chamfered so that its cross-section area becomes large.

As shown in FIG. 7, on the lower side of the vortex chamber 34 (side opposite to a side closed by the cover member 122), the taper port 44 continuous to the vortex chamber 34 is formed. The taper port 44 is formed coaxially to the vortex chamber 34. One end on the expanded diameter side of the taper port 44 is formed to have nearly the same diameter as that of the vortex chamber 34, and is connected to the vortex chamber 34. The taper port 44 is formed such that its diameter becomes gradually smaller from the one end toward the other end (a reduced diameter side). To the reduced diameter side of the taper port 44, a connecting port 124 is connected. The connecting port 124 is formed coaxially to the taper port 44. The connecting port 124 is connected to a suction side of a first fuel pump 126 (see FIG. 6).

The cylinder portion 56 is provided in the cover member 122 in a manner to protrude to the vortex chamber 34. The cylinder portion 56 is formed coaxially to the vortex chamber 34. The cylinder portion 56 is formed to have a desired length that reaches the inside of the taper port 44. A supply port 128 continuous to the taper port 44 is formed in the cylinder portion 56. The supply port 128 is also formed to penetrate the cover member 122. Further, the supply port 128 is arranged coaxially to the vortex chamber 34. A water supply pipe 118 (see FIG. 6) is connected to the supply port 128.

In the outer circumference of the cylinder portion 56, the flow regulating fin 62 is provided orthogonal to an axial direction of the vortex chamber 34 (see FIG. 5). The flow regulating fin 62 is formed almost all around the outer circumference of the cylinder portion 56. Also, the flow regulating fin 62 protrudes from the outer circumference of the cylinder portion 56 in a manner to reach the inner wall of the vortex chamber 34.

The flow regulating fin 62 is provided near the outlet of the passages 42 to the vortex chamber 34. In the present embodiment, the flow regulating fin 62 includes three blades 62a, 62b and 62c. One end side of each blade 62a, 62b, 62c is slightly bent. Thereby, gaps are formed between the each blade 62a, 62b, 62.

The bent on one end side of each blade 62a, 62b, 62c is configured such that a fluid forming a vortex flows through the gaps between each blade 62a, 62b, 62c and forms the vortex of fluid properly. Also, the thickness "t" of the flow regulating fin 62 is 0.1-0.2 mm as in the above-described embodiment. The thickness "t" can take a different value and can be determined as required depending on experimental results and so on.

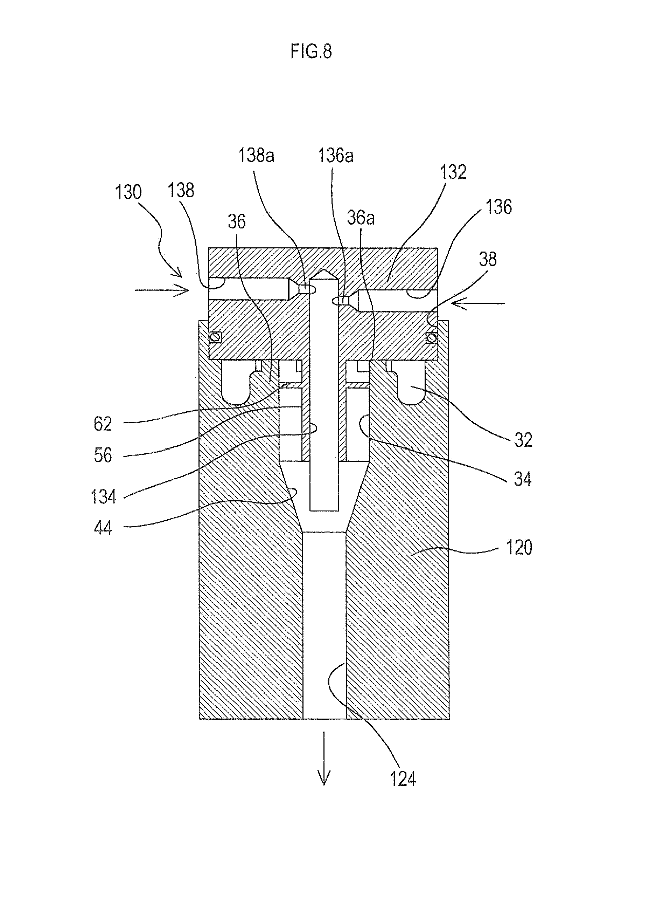

Inside the mixing tank 104, a second mixer 130 shown in FIG. 8 in detail is provided. The second mixer 130 has the same configuration as that of the mixer body 120 of the first mixer 114. The second mixer 130 is different from the first mixer 114 in that the connection port 124 is connected to a suction side of a second fuel pump 131 (see FIG. 6). A cover member 132 is inserted to the opening 38 of the mixer body 120. By the cover member 132 inserted to the opening 38, each one end side of the swirl chamber 32 and the vortex chamber 34 is closed. The cylinder portion 56 is provided in the cover member 132. A connection port 134 continuous to the taper port 44 is formed in the cylinder portion 56. On the outer circumference of the cylinder portion 56, the flow regulating fin 62 is provided.

The connection port 134 is formed coaxially to the vortex chamber 34. In the cover member 132, an air supply port 136 and a water supply port 138 communicating with the connection port 134 are formed to communicate via throttles 136a and 138. The air suction pipe 54 (see FIG. 6) is connected to the air supply port 136. One end of the air suction pipe 54 is communicated with an air layer above the fuel in the mixing tank 104. To the water supply port 138, a water suction pipe 140 (see FIG. 6) is connected. One end of the water suction pipe 140 is communicated with a recess 104a formed at the bottom inside the mixing tank 104.

The outlet sides of the first fuel pump 126 and the second fuel pump 131 are connected to outlet pipes 142. The two outlet pipes 142 are joined together to be connected to a mixer 144 provided inside the mixing tank 104.

The mixer 144 basically has the same configuration as that of the above-described mixer 26. The mixer 144 is different from the mixer 26 in that the mixer body 30a is not provided with the first supply port 46 and the second supply port 52.

Now, the operation of the mixers 114, 130 and 144 will be described.
The first fuel pump 126, when driven, sucks fuel and water from the fuel tank 100 and the water tank 102, respectively, through the first mixer 114. The fuel flows from the fuel supply pipe 116 to the first mixer 114. The water flows from the water supply pipe 118 to the first mixer 114.

In the first mixer 114, a suction force of the first fuel pump 126 works on the connection port 124 of the first mixer 114. Thus, the fuel flows into the swirl chamber 32 through the inlet port 28. Since the fuel flows into the ring-shaped swirl chamber 32 in its tangential direction, the fuel forms a swirl flow in accordance with the shape of the swirl chamber 32. The fuel flows from the swirl chamber 32 to the vortex chamber 34 through the passages 42. At this point, total sum of cross-sectional areas of the plurality of the passages 42 is smaller than a cross-sectional area of the swirl chamber 32. When the fuel flows into the vortex chamber 34 through the passages 42 from the swirl chamber 32, a flow rate of the fuel increases. Also, the cross-sectional areas of the passages 42 become gradually smaller toward the vortex chamber 34. Thus, as the fuel flows toward the vortex chamber 34, the flow rate of the fuel further increases.

When the fuel flows into the vortex chamber 34 from the passages 42, a vortex flow having a large flow rate is produced around the outer circumference of the cylinder portion 56 in the vortex chamber 34. In the vortex chamber 34, the vortex flow of the fuel 8 flows through the gaps between each blade 62a, 62b, 62c. The vortex flow around the cylinder portion 56 is regulated by the flow regulating fin 62.

The vortex flow of the fuel flows into the taper port 44 from the vortex chamber 34. At this point, the water flows into the taper port 44 through the water supply pipe 118 and the supply port 128. Due to the vortex flow of the fuel inside the taper port 44, the fuel and the water are mixed to produce a mixed fuel as an emulsion fuel. The mixed fuel is sucked by the first fuel pump 126 through the connection port 124, and supplied to the mixer 144 through the outlet pipe 142 from the first fuel pump 126.

The mixed fuel supplied to the mixer 144 flows into the taper port 44 from the swirl chamber 32, the passages 42 and the vortex chamber 34 in the mixer 144, and is mixed by the vortex flow inside the taper port 44. The water is microparticulated at this point. Then, the mixed fuel passes through the connection port 58 inside the cylinder portion 56 from the taper port 44 to be discharged from the outlet port 60 into the mixing tank 104. Inside the vortex chamber 34 and the taper port 44, the fuel forms a high speed vortex flow to swirl. The water is mixed into the fuel. Thus, microparticulation of the water is facilitated.

The second fuel pump 131, when driven, sucks the mixed fuel, water and air inside the mixing tank 104 through the second mixer 130. The mixed fuel inside the mixing tank 104 flows into the swirl chamber 32 through the inlet port 28, and flows into the taper port 44 from the passages 42 and the vortex chamber 34.

The water and the mixed fuel inside the recess 104a flow into the taper port 44 through the water suction pipe 140, the water supply port 138 and the connection port 134. Also, the air flows into the taper port 44 through the water suction pipe 54, the air supply port 136 and the connection port 134. The water and air flowing into the taper port 44 are mixed with the mixed fuel by the vortex flow of the mixed fuel inside the taper port 44. Thereby, an emulsion fuel including water and air is produced.

The air is mixed into the mixed fuel inside the taper port 44 to form fine bubbles. The water is also mixed into the mixed fuel inside the taper port 44 to form fine foams. That is, the mixed fuel containing fine bubbles and foams is produced. The mixed fuel is sucked by the second fuel pump 131 through the connection port 124 from the taper port 44.

The second fuel pump 131 supplies the mixed fuel to the mixer 144. In the mixer 144, the mixed fuel flows from the swirl chamber 32, the passages 42 and the vortex chamber 34 to the taper port 44. The water and air are microparticulated. Moreover, the mixed fuel passes through the connection port 58 inside the cylinder portion 56 from the taper port 44 and is discharged into the mixing tank 104 from the outlet port 60. Inside the vortex chamber 34 and the taper port 44, the mixed fuel forms a high speed vortex flow to swirl. Thus, microparticulation of the water and air is facilitated.

The mixed fuel produced inside the mixing tank 104 is supplied to an injection pump 110 0 by the fuel pump 108 through a filter 106. The mixed fuel is injected to each cylinder of the internal combustion engine 1 through each fuel injection valve 2 in the internal combustion engine 1 from the injection pump 110. The excess mixed fuel in the injection pump 110 is returned to the mixing tank 104 through the return pipe 112.

In driving the internal combustion engine 1, the microparticulated air in the mixed fuel facilitates combustion of fuel. Also, the water 10 causes a microexplosion, etc. Thereby, combustion efficiency is improved. Also, combustion is performed at lower temperature. Fuel consumption is improved due to improvement in combustion efficiency. Also, since combustion is performed at low temperature, nitrogen oxide is reduced to improve emission.

### [Third embodiment]

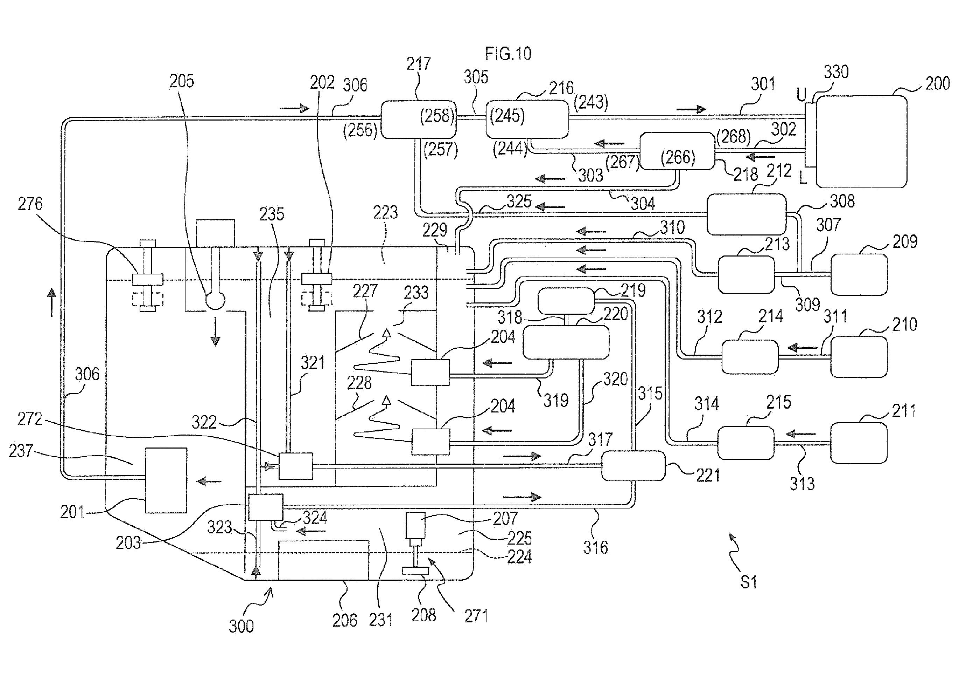

Now, a fuel supply system S1 according to a third embodiment will be described, referring to FIGS. 10 to 15. The mixer in the first embodiment or in the second embodiment can be used in the presnt embodiment. Accordingly, particular description of the mixer will not be repeated.

### (Configuration of the fuel supply system S1)

The fuel supply system S1 shown in FIG. 10 is a system that supplies a mixed fuel (emulsion fuel in which water and air are mixed into fuel) to an internal combustion engine 200. Here, it is presupposed that the internal combustion engine 200 is a four-cylinder diesel engine. The fuel supply system S1 can be also applied to a gasoline engine. The fuel supply system S1 can be applied to an internal combustion engine having a different number of cylinders than a four-cylinder internal combustion engine.

As shown in FIG. 10, the fuel supply system S1 includes a fuel tank 209, a water tank 210, an oil tank 211 and a mixing tank 300. The mixing tank 300 includes a filter 201, a level sensor 202, a mixer 203, a mixer 204, a valve 205, an electrode plate 206, a vibration device 271 and a mixer 272. Hereinafter, in the mixing tank 300 shown in FIG. 10, the side to which the level sensor 202 and the valve 205 are attached is referred to as an upper portion. The side on which the electrode plate 206 is provided is referred to as a bottom portion.

The mixing tank 300 includes a guide chamber 229, a first storage chamber 231, a mixing chamber 233, a second storage chamber 235 and a third storage chamber 237.
The guide chamber 229 is connected to the fuel tank 209, the water tank 210 and the oil tank 211, respectively. Also, the guide chamber 229 is connected to the internal combustion engine 200. More particularly, the guide chamber 229 is connected to a downstream side (shown by a reference sign L) of a supply pipe 330 which supplies fuel to a not shown fuel injection valve. The supply pipe 330 has the same configuration as that of the aforementioned supply pipe 4.

On an upstream side (shown by a reference sign U) of the supply pipe 330, a float valve 216 is provided.

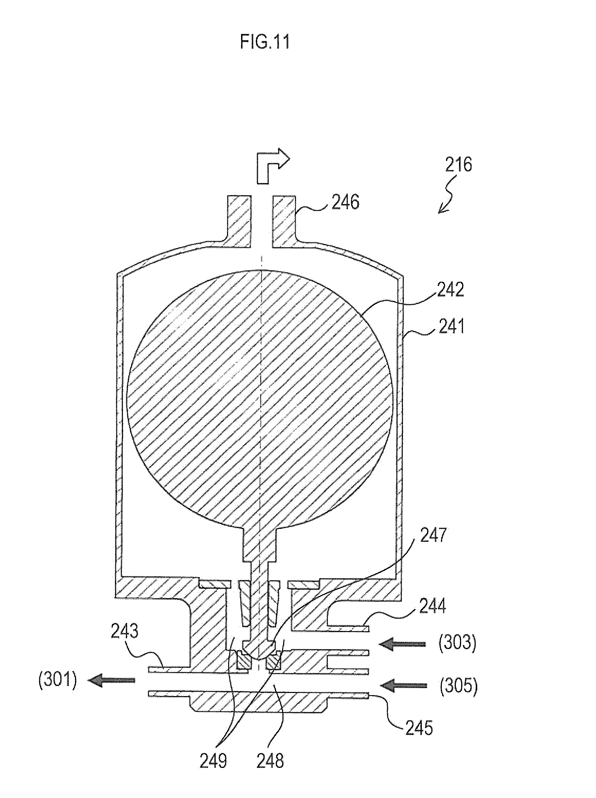

FIG. 11 is a cross sectional configuration diagram of the float valve 216. In FIG. 11, an upper side of the drawing sheet is regarded as upward, and a lower side of the drawing sheet is regarded as downward.

The float valve 216 mainly includes a housing 241 and a float 242 housed in the housing 241. At the bottom of the float 242, a valve member 247 is provided for communication or interruption between passages 248 and 249.

The float valve 216 is provided with ports 243, 244 and 245 as inlet/outlet ports of fluid. A port 246 which can discharge gas is also provided at the upper portion of the housing 241.

The port 243 is used as an outlet port through which fluid can be discharged. The ports 244 and 245 are used as inlet ports through which fluid can flow in. The port 243 is connected to a supply pipe 330 via a pipe 301 (see FIG. 10 regarding pipes; the same applies below). The port 244 is connected to an outlet side port of a three-way valve 218 via a pipe 303. The port 245 is connected to an outlet side port of a three-way valve 217 via a pipe 305.

The fuel returned from the internal combustion engine 200 can flow into the port 244 through the three-way valve 218. The mixed fuel from the mixing tank 300 or the fuel from the fuel tank 209 can flow into the port 245 by switching of the three-way valve 217.

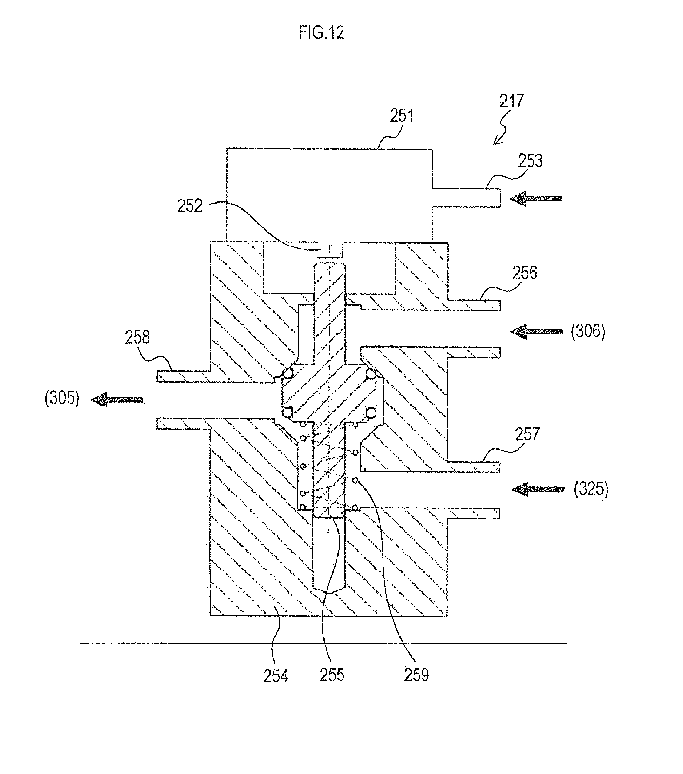

FIG. 12 is a cross sectional configuration diagram of the three-way valve 217. In FIG. 12, an upper side of the drawing sheet is regarded as upward, and a lower side of the drawing sheet is regarded as downward.
The three-way valve 217 mainly includes an air cylinder 251 and a main body 254.

The air cylinder 251 includes a piston rod 252 and a port 253. When a working fluid (air, for example) having a predetermined pressure is supplied to the port 253, the piston rod 252 protrudes. When the piston rod 252 protrudes, a switching member 255 provided inside the main body 254 is pushed downward.

The main body 254 includes the aforementioned switching member 255 as a component to switch the passage. The main body 254 also houses a spring 259. The spring 259 is arranged to push up the switching member 255.

In the main body 254, ports 256, 257 and 258 are provided as inlet/outlet ports of fluid. The port 258 is used as an outlet port through which fluid can be discharged. The port 256 and the port 257 are used as inlet ports through which fluid can flow in.

The port 258 is connected to the port 245 of the float valve 216 via a pipe 305 (see FIG. 10 regarding pipes; the same applies below). The port 256 is connected to the third storage chamber 237 of the mixing tank 300 via a pipe 306. The port 257 is connected to the fuel tank 209 via a pipe 325, etc.

In a state in which the piston rod 252 of the air cylinder 251 is not protruded, the switching member 255 is pushed upward by the action of the spring 259. While the passage between the ports 256 and 258 is closed, the port 257 is communicated with the port 258. In this case, the fuel inside the fuel tank 209 can be supplied to the float valve 216.

In a state in which the piston rod 252 of the air cylinder 251 is protruded, the switching member 255 is pushed downward against the action of the spring 259. In this case, while the passage between the ports 257 and 258 is closed, the port 256 is communicated with the port 258. In this case, the fuel inside the mixing tank 300 can be supplied to the float valve 216.

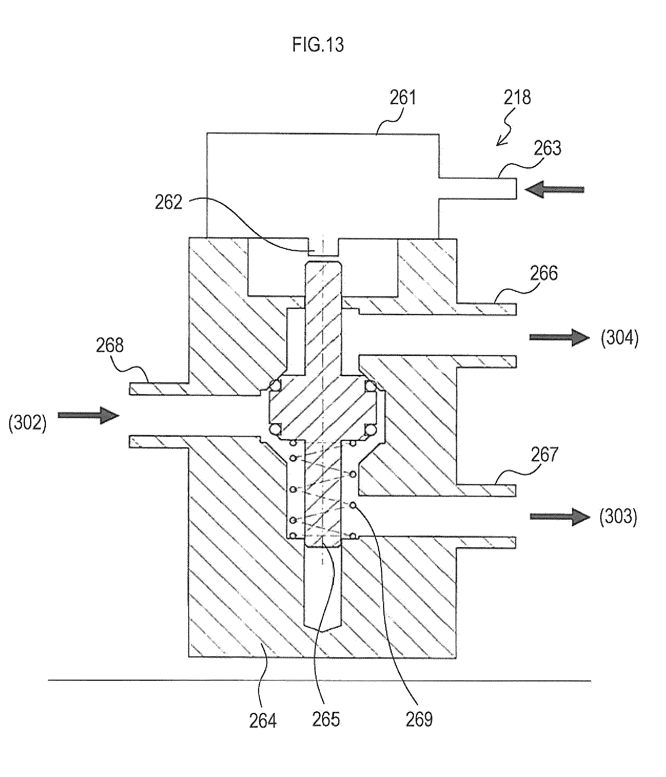

FIG. 13 is a cross sectional configuration diagram of the three-way valve 218. In FIG. 13, an upper side of the drawing sheet is regarded as upward, and a lower side of the drawing sheet is regarded as downward.
The three-way valve 218 mainly includes an air cylinder 261 and a main body 264.

The air cylinder 261 includes a piston rod 262 and a port 263. When a working fluid (air, for example) having a predetermined pressure is supplied to the port 263, the piston rod 262 protrudes. When the piston rod 262 protrudes, a switching member 265 provided inside the main body 264 is pushed downward.

The main body 264 includes the aforementioned switching member 265 as a component to switch the passage. The main body 264 also houses a spring 269. The spring 269 is arranged to push up the switching member 265.

In the main body 264, ports 266, 267 and 268 are provided as inlet/outlet ports of fluid. The port 268 is used as an outlet port through which fluid can be discharged. The ports 266 and 267 are used as inlet ports through which fluid can flow in.

The port 268 is connected to a downstream side of the supply pipe 330 via a pipe 302 (see FIG. 10 regarding pipes; the same applies below). The port 266 is connected to the guide chamber 229 of the mixing tank 300 via a pipe 304. The port 267 is connected to the port 244 of the float valve 216 via the pipe 303, etc.

In a state in which the piston rod 262 of the air cylinder 261 is not protruded, the switching member 265 is pushed upward by the action of the spring 269. While the passage between the ports 268 and 266 is closed, the port 268 is communicated with the port 267. In this case, the fuel returned from the supply pipe 330 can be supplied to the float valve 216.

In a state in which the piston rod 262 of the air cylinder 261 is protruded, the switching member 265 is moved downward against the action of the spring 269. In this case, while the passage between the ports 268 and 267 is closed, the port 266 is communicated with the port 268. In this case, the fuel returned from the supply pipe 330 can be guided to the guide chamber 229 of the mixing tank 300.

Referring to FIG. 10, an overall configuration of the fuel supply system S1 will be further described.
A pump 213 is provided in a path between the fuel tank 209 and the guide chamber 229. The fuel tank 209 is connected to the pump 213 via the pipes 307 and 309. The pump 213 is connected to the guide chamber 229 via a pipe 310.

A pipe 308 branches off from the pipe 307. To the end of the pipe 308, a filter 212 is provided. The filter 212 is connected to a port 257 (see also FIG. 12) of the three-way valve 217 via a pipe 325.

A pump 214 is provided in a passage between the water tank 210 and the guide chamber 229. The water tank 210 is connected to a pump 214 via a pipe 311. The pump 214 is connected to the guide chamber 229 via a pipe 312.

A pump 215 is provided in a passage between the oil tank 211 and the guide chamber 229. The oil tank 211 is connected to the pump 215 via a pipe 313. The pump 215 is connected to the guide chamber 229 via a pipe 314.

When the pumps 213, 214 and 215 are driven, the fuel inside the fuel tank 209, the water inside the water tank 210 and the oil inside the oil tank 211 are respectively guided to the guide chamber 229. Also, excess fuel which has not been supplied to the fuel injection valve of the internal combustion engine 200 in the supply pipe 330 provided in the internal combustion engine 200 can be guided to the guide chamber 229 through the three-way valve 218.

The fuel, water and oil guided to the guide chamber 229 are stored in the first storage chamber 231. The specific gravity of water is larger than the specific gravity of fuel (light oil) and that of oil. Thus, in the first storage chamber 231, the water is collected at the bottom. Particularly, at the bottom portion of the first storage chamber 231, a water layer 224 including water is formed. On the upper side of the water layer 224, a fuel layer 225 including fuel is formed. Also, on the upper side of the mixing tank 300, an air layer 223 including air is formed.

In the first storage chamber 231 of the mixing tank 300, the mixer 203, the electrode plate 206 and the vibration device 271 are arranged.
The mixer 203 has the same configuration as that of the aforementioned mixer 26 (see FIGS. 1 and 2). The second mixer 130 (see FIGS. 6 and 8) can be also used as the mixer 203.

The mixer 203 is configured to suck air from the air layer 223 via a pipe 322, suck water from the water layer 224 via a pipe 323, and suck fuel from the fuel layer 225 via the pipe 324.

Particularly, the second supply port 52 (see FIG. 2) of the mixer 203 is communicated with the air layer 223 via the pipe 322. The first supply port 46 (see FIG. 2) is communicated with the water layer 224 via the pipe 323. The inlet port 28 (see FIGS. 3 and 4) is communicated with the fuel layer 225 via the pipe 324.

The electrode plate 206 is provided at the bottom of the first storage chamber 231 to be soaked in the water layer 224. A plurality of the electrode plates 206 are disposed side by side. In one example, the number of the electrode plates is about fifty. Each electrode plate 206 has a length of 100 mm (length in the right and left direction of the drawing sheet), a height of 50 mm (length in the up and down direction of the drawing sheet), and a thickness of 1 mm, in one example. The thickness can be less than 1 mm. The electrode plate 206 can be made of stainless, in one example.

The electrode plate 206 is configured such that a voltage is applied from a not shown power unit. In one example, a voltage of 24 V can be applied. When a voltage is applied to the electrode plate 206, water in the water layer 224 is electrolyzed.

In electrolysis of water, the following reactions occur at the anode and the cathode.

Anode: 2H₂O→4H⁺+O₂+4e⁻

Cathode: 2H₂O→2OH⁻+H₂

With the above reactions at both the anode and cathode, hydrogen gas and oxygen gas are generated.

2H₂O→2H₂+O₂

Next, the vibration device 271 is provided in the vicinity of the electrode plates 206.
The vibration device 271 includes an oscillator 207 and a vibrator 208. The vibration device 271 is configured such that the vibrator 208 oscillates at a predetermined frequency produced by the oscillator 207. The oscillation frequency is set within an audible field, in one example. More particularly, for example, the oscillation frequency is set in a range from approximately 20 Hz to 16000 Hz.

The vibration device 271 produces predetermined oscillation to keep bubbles (bubbles of hydrogen gas and oxygen gas) from adhering to the electronic plates 206, or allow to remove adhered bubbles.

As described in the above, upon electrolysis of water by the electrode plates 206, plus ion (H⁺) and minus ion (OH⁻) are generated at the anode and the cathode. It is pointed out that such generation of ions improves affinity between water and oil, and makes mixing of water into oil easier.

The fuel supply system S1 includes a three-way valve 221 connected to the mixer 203, a pump 219 connected to the three-way valve, and a chamber 220 connected to the pump 219.
The three-way valve 221 has the same configuration as that of the aforementioned three-way valve 217. One of two inlet ports of the three-way valve 221 is connected to an outlet side of the mixer 203 via a pipe 316. The other of the two inlet ports is connected to an outlet side of a later-described mixer 272 via a pipe 317. An outlet port of the three-way valve 221 is connected to the pump 219 via a pipe 315.

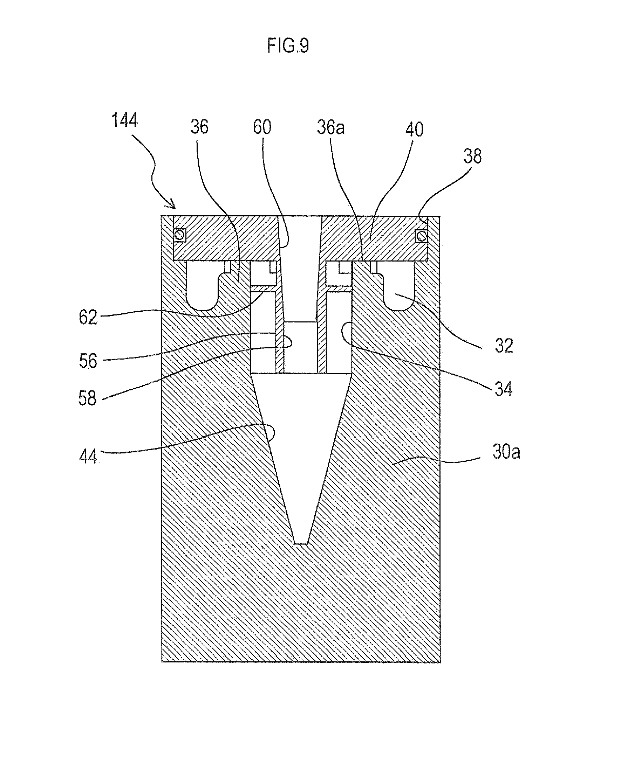

The pump 219 is connected to the chamber 220 via a pipe 318.
Pipes 319 and 320 extend from the chamber 220. The pipe 319 is connected to the mixer 204 provided in the mixing chamber 233 of the mixing tank 300. The pipe 320 is connected to a mixer 274 provided also in the mixing chamber 233. The mixers 204 and 274 have the same configuration as that of the aforementioned mixer 144 (see FIG. 9).

When the pump 219 is driven, the mixed fuel mixed by the mixer 203, or the mixed fuel mixed by the mixer 272 is supplied to the mixers 204 and 274 through the chamber 220, in accordance with the passage switched by the three-way valve 221.

The mixers 204 and 274 further mix the supplied mixed fuel and discharges the mixed fuel to the mixing chamber 233.
The mixing chamber 233 is formed into a tapered shape. More particularly, a tapered shape 227 is formed corresponding to an outlet opening of the mixer 204, and a tapered shape 228 is formed corresponding to an outlet opening of the mixer 274.

The mixed fuel discharged from the mixers 204 and 274 are respectively mixed by the tapered shapes 227 and 228 and accelerates the flow rate to be guided to the second storage chamber 235.
The level sensor 202, the valve 205 and the mixer 272 are arranged in the second storage chamber 235 of the mixing tank 300.

The level sensor 202 is a sensor for detecting the amount of the mixed fuel inside the second storage chamber 235. The level sensor 202 is configured such that its movable body is moved depending on the height of the fluid level of the mixed fuel inside the second storage chamber. The level sensor 202 is configured to detect the height of the fluid level of the mixed fuel, and the amount of the mixed fuel, depending on the position of the movable body.

The valve 205 can communicate the second storage chamber 235 with the third storage chamber 237, or interrupt communication between the second storage chamber 235 and the third storage chamber 237. When the valve 205 is open, the mixed fuel inside the second storage chamber 235 is supplied from the second storage chamber 235 to the third storage chamber 237.

The mixer 272 has the same configuration as that of the above-described first mixer 114 (see FIGS. 6 and 7). In this case, the supply port 128 is connected to the air layer 223. The mixer 272 is configured such that air is sucked through the supply port 128. Particularly, the supply port 128 is connected to the air layer 223 via a pipe 326.

Further, the mixer 272 is connected to the fuel layer 225 via a pipe 327, and is configured to be able to suck fuel from the fuel layer 225. Particularly, the inlet port 28 (see FIGS. 3 and 4) of the mixer 272 is communicated with the fuel layer 225 via the pipe 327.

The third storage chamber 237 is provided with the filter 201 and a level sensor 276. The filter 201 is connected to the port 256 of the aforementioned three-way valve 217 via the pipe 306. The mixed fuel inside the third storage chamber 237 is supplied to the internal combustion engine 200 through the filter 201.

The level sensor 276 has the same configuration and function as those of the aforementioned level sensor 202.

### (Outline of operation of the fuel supply system S1)

Operation of the fuel supply system S1 is controlled by a not shown control unit.

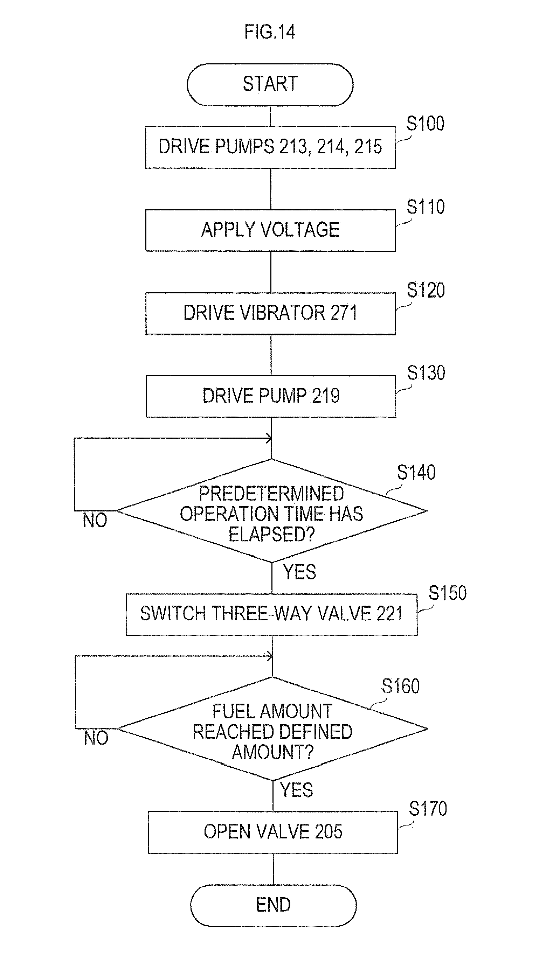

FIG. 14 is a flowchart illustrating the outline of operation of the fuel supply system S1 controlled by the control unit.
In the fuel supply system S1, the not shown control unit first drives the pumps 213, 214 and 215 (S100). Thereby, the fuel, water and oil are respectively guided from the fuel tank 209, the water tank 210 and the oil tank 211 to the guide chamber 229, and further to the first storage chamber 231.

The control unit applies a predetermined voltage (24 V, in one example) to the electrode plate 206 (S110).
Also, the vibration device 271 is driven (S120).

In addition, the pump 219 is driven (S130).
Also, S100 to S130 may be started simultaneously.
When the pump 219 is driven, the fuel, oil, water and air flow into the mixer 203 arranged in the first storage chamber 231 and are mixed to produce mixed fuel.

The produced mixed fuel is supplied to the mixers 204 and 274 by driving of the pump 219 and is further mixed. At this point, in the three-way valve 221, the passage from the pipe 316 to the pipe 315 is opened. On the other hand, the passage from the pipe 317 to the pipe 315 is closed.

Subsequently, the control unit determines whether or not a predetermined operation time (several minutes, in one example) has elapsed (S140). If it is determined that the predetermined operation time has not elapsed (S140: NO), the control unit executes S140 again. On the other hand, if it is determined that the predetermined operation time has elapsed (S140: YES), the control unit switches the passage in the three-way valve 221 (S150). Particularly, the passage from the pipe 316 to the pipe 315 is closed, and the passage from the pipe 317 to the pipe 315 is opened. Thereby, the mixed fuel mixed by the mixer 272 in the second storage chamber 235 is supplied to the mixers 204 and 274 by driving of the pump 219. As a result, sufficient mixing is achieved.

Subsequently, the control unit determines whether or not the amount of the mixed fuel inside the second storage chamber 235 has reached a defined amount based on a result of detection by the level sensor 202 (S160). If it is determined that the amount of the mixed fuel inside the second storage chamber 235 has not reached the defined amount (S160: NO), the control unit executes S160 again. On the other hand, if it is determined that the amount of the mixed fuel inside the second storage chamber 235 has reached the defined amount (S160: YES), the control unit opens the valve 205 (S170), and ends the present process.

As a result, the mixed fuel produced in the mixing tank 300 is supplied to the supply pipe 330 of the internal combustion engine 200 through the three-way valve 217 and the float valve 216. From the supply pipe 330, the fuel is injected to each cylinder of the internal combustion engine 200 by a not shown fuel injection valve.

Switching of the passage in the three-way valves 217 and 218 and the float valve 216 is controlled in accordance with the state and amount of the mixed fuel inside the mixing tank 300, the amount of fuel returned from the supply pipe 330 of the internal combustion engine 200, and so on.

For example, the passage from the fuel tank 209 to the three-way valve 217, further to the float valve 216, and then to the internal combustion engine 200 may be opened so that the fuel in the fuel tank 209 can be directly supplied to the internal combustion engine 200. Also, the passage from the internal combustion engine 200 to the three-way valve 218, further to the float valve 216, and then to the internal combustion engine 200 may be opened so that the fuel returned from the supply pipe 330 of the internal combustion engine 200 can be directly supplied to the internal combustion engine 200.

### (Passage control)

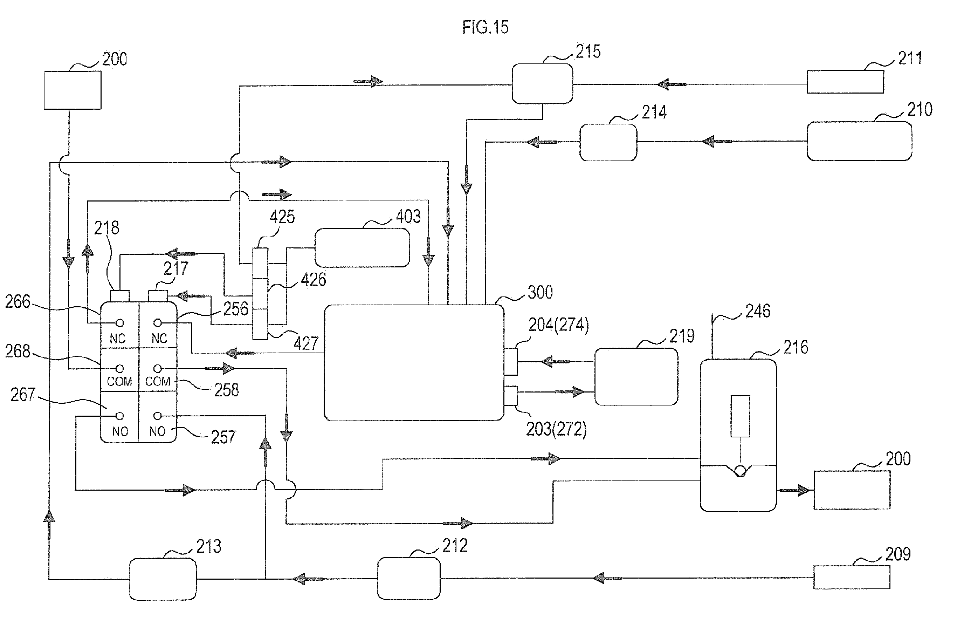

The configuration of the passages and the outline of operation of the fuel supply system S1 will be described by way of FIG. 15. The same reference numbers are used for the same components as those in FIG. 10. Also, detailed description on the components which are already described in FIG. 10 is not repeated. In FIG. 10, the filter 212 is arranged in a branch path separate from the passage of the pump 213. However, as shown in FIG. 15, the filter 212 may be arranged in a passage between the fuel tank 209 and the pump 213.

FIG. 15 shows an air tank 403, and air switching valves 425, 426 and 427. The three-way valves 217 and 218 are configured to switch the internal supply path in accordance with the air supplied from the air tank 403 via the air switching valves 425, 426 and 427.

The fuel inside the fuel tank 209 is supplied to the mixing tank 300 by driving of the pump 213. In this case, the passage between the ports 257 and 258 is closed, so that the fuel inside the fuel tank 209 is not supplied to the internal combustion engine 200.

Normally, the port 256 is communicated with the port 258. The mixed fuel produced in the mixing tank 300 is supplied to the internal combustion engine 200. While the passage between the ports 268 and 267 is closed, the port 268 is communicated with the port 266. As a result, the fuel returned from the internal combustion engine 200 is returned to the mixing tank 300.

In the event of malfunction such as a failure of the mixing tank 300, while the passage between the ports 256 and 258 is closed, the port 257 is communicated with the port 258 so that the fuel in the fuel tank 209 can be supplied to the internal combustion engine 200.

Or, while the passage between the ports 268 and 266 is closed, the port 268 is communicated with the port 267 so that the fuel returned from the internal combustion engine 200 can be directly supplied to the internal combustion engine 200.

As noted above, in the third embodiment, the mixed fuel produced in the mixing tank 300 is basically supplied to the internal combustion engine 200. In the event of malfunction such as a failure of the mixing tank 300, the fuel inside the fuel tank 209 can be directly supplied to the internal combustion engine 200 or the fuel returned from the internal combustion engine 200 can be supplied to the internal combustion engine 200 again.

Thus, basically by supplying the mixed fuel produced in the mixing tank 300, combustion efficiency can be improved as noted above. In other words, fuel comsumption can be improved. Also, nitrogen oxide to be discharged can be reduced by performing combustion at low temperature.

In the event of malfunction of the mixing tank 300, the fuel inside the fuel tank 209 (normally provided in a vehicle) can be directly supplied to the internal combustion engine 200. Thus, the vehicle can travel with accuracy and safty.

After operation of the internal combustion engine 200 and the fuel supply system S1 are started and until mixed fuel in a sufficiently mixed state is produced, the fuel inside the fuel tank 209 may be supplied to the internal combustion engine 200. Thereafter, when the mixed fuel in a sufficiently mixed state suitable for use is produced, the mixed fuel may be started to be supplied to the internal combustion engine 200.

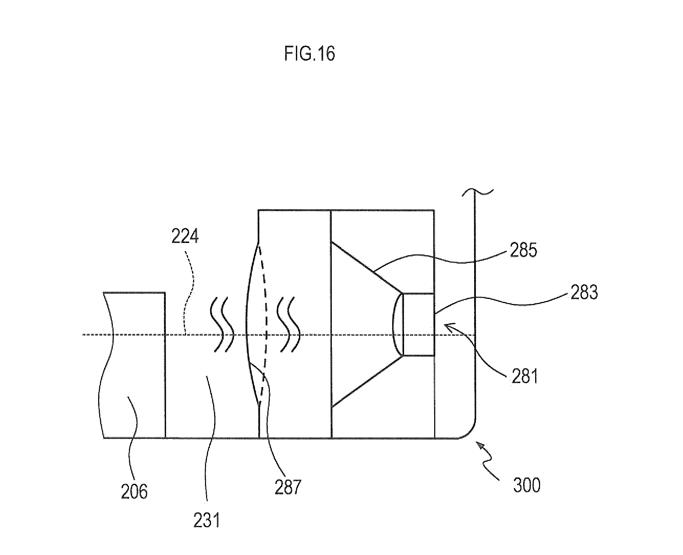

As noted above, the present invention should not be limited to the above described embodiments, and can be practiced in various forms within the scope not departing from the gist of the present invention.
For example, FIG. 16 is a diagram of an oscillation device according to a variation. In FIG. 16, an oscillation device 281 is shown in the place of the aforementioned oscillation device 271.

The oscillation device 281 is provided adjacent to the electrode plate 206 in the vicinity of the electrode plate 206. The electrode plate 206 is provided such that part of the electrode plate 206 is soaked in the water layer 224. The oscillation device 281 is also provided such that part of the oscillation device 281 is soaked in the water layer 224.

The oscillation device 281 includes an ordinary speaker 283 and a vibrator 287. The speaker 283 is provided with a diahgragm 285 as is known. The diaphragm 285 vibrates due to flowing of sound signal to a not shown coil of the speaker 283. As a result, sound (vibration at a frequency of the audible field) is produced. In the oscillation device 281, the vibrator 287 is provided to vibrate (to resonate) in accordance with vibration produced from the speaker 283.

Specifically, the vibrator 287 is configured to vibrate due to vibration produced from the speaker 283. With vibration of the vibrator 287 and transmittance of the vibration to the electrode plates 206 through the fluid (water or fuel), adhesion of bubbles (bubbles of hydrogen gas or oxygen gas) to the electrode plates 206 is inhibited, or bubbles adhered to the electrode plates 206 is removed.

## Claims

1. A mixer that mixes a fuel for an internal combustion engine with a desired fluid, the mixer comprising:
a ring-shaped swirl chamber;
an inlet port that is connected to the swirl chamber in a direction tangential to an outer circumference of the swirl chamber to suck a fuel;
a cylindrical vortex chamber that is coaxially and more inwardly formed with respect to the swirl chamber;
a passage that connects the swirl chamber to the vortex chamber, the passage being composed of a plurality of passages, and a connecting path of each the passage being formed into a near arc shape so that the plurality of passages form a vortex pattern;
a taper port that is coaxially connected to the vortex chamber and is configured so that an inner diameter thereof is decreased from a vortex chamber-side end toward an opposite side end; and
a supply port that is in communication with the taper port to suck the desired fluid.

2. The mixer according to claim 1, further comprising:
a cylinder portion that is formed coaxially to the vortex chamber, and arranged to protrude into the vortex chamber; and
a flow regulating fin that protrudes from an outer wall of the cylinder portion to reach an inner circumferential wall of the vortex chamber.

3. The mixer according to claim 2, wherein the cylinder portion includes an outlet port that is formed coaxially to the vortex chamber and communicates the taper port with an outside of the mixer.

4. The mixer according to claim 1, wherein the supply port is in communication with the taper port at a reduced diameter side end of the taper port.

5. The mixer according to claim 3, wherein the outlet port is formed into a taper.

6. A fuel supply system that supplies a fuel to an internal combustion engine, the fuel supply system including a mixer that mixes the fuel for the internal combustion engine and a desired fluid, the mixer comprising:
a ring-shaped swirl chamber;
an inlet port that is connected to the swirl chamber in a direction tangential to an outer circumference of the swirl chamber to suck a fuel;
a cylindrical vortex chamber that is coaxially and more inwardly formed with respect to the swirl chamber;
a passage that connects the swirl chamber to the vortex chamber, the passage being composed of a plurality of passages, and a connecting path of each the passage being formed into a near arc shape so that the plurality of passages form a vortex pattern;
a taper port that is coaxially connected to the vortex chamber and is configured so that an inner diameter thereof is decreased from a vortex chamber-side end toward an opposite side end; and
a supply port that is in communication with the taper port to suck the desired fluid, wherein
the fuel supply system is configured to supply the fuel mixed by the mixer to the internal combustion engine.

7. The fuel supply system according to claim 6, wherein the fuel supply system is configured to be able to switch the fuel supplied to the internal combustion engine between a fuel prestored in a fuel tank for the internal combustion engine and a fuel mixed by the mixer.
